# EUROPÄISCHE PATENTSCHRIFT

(11) **EP 2 879 869 B1**
(45) Veröffentlichungstag und Bekanntmachung des Hinweises auf die Patenterteilung: **29.04.2020**
(21) Anmeldenummer: 13732175.8
(22) Anmeldetag: 28.06.2013
(51) Int. Cl.: B32B 17/10, H05B 3/86, H01R 4/58, H05B 3/06, H01Q 1/12, H01L 31/048

(54) **VERBUNDSCHEIBE MIT ELEKTRISCHER KONTAKTIERUNG**
LAMINATED GLASS PANE WITH ELECTRIC CONTACTS
PLAQUE DE VERRE FEUILLETÉE AVEC MISE EN CONTACT ÉLECTRIQUE

(30) Priorität: 01.08.2012 EP 12178806
(43) Veröffentlichungstag der Anmeldung: 10.06.2015
(73) Patentinhaber: Saint-Gobain Glass France, 92400 Courbevoie (FR)
(72) Erfinder: REUL, Bernhard, 52134 Herzogenrath (DE); SCHALL, Günther, 52372 Kreuzau (DE)
(74) Vertreter: Gebauer, Dieter Edmund
(86) Internationale Anmeldenummer: PCT/EP2013/063630
(87) Internationale Veröffentlichungsnummer: WO 2014/019780

(56) Entgegenhaltungen:
- WO-A1-2009/152871
- DE-A1- 4 126 533
- DE-B3-102004 050 158
- DE-C1- 10 249 992
- DE-C1- 19 829 151
- DE-U1- 9 013 380
- US-A- 6 042 932
- US-A1- 2003 146 199
- US-A1- 2006 186 105
- US-A1- 2007 029 299
- US-B1- 6 204 480

## Beschreibung

Die Erfindung betrifft eine Verbundscheibe mit elektrischer Kontaktierung, ein Verfahren zu deren Herstellung und deren Verwendung.

Es sind Verbundscheiben bekannt, die auf einer innenseitigen Oberfläche einer der Einzelscheiben eine elektrisch leitfähige Beschichtung aufweisen, welche elektrisch kontaktiert, also beispielsweise mit einer externen Spannungsquelle oder einem Empfangsgerät verbunden ist. Eine solche elektrisch leitfähige Beschichtung ist beispielsweise eine beheizbare Beschichtung auf Metallbasis. Weitere bekannte elektrisch leitfähige Beschichtungen sind beispielsweise Flächenelektroden eines elektrisch schaltbaren Funktionselements, wie eines elektrochromen Funktionselements, oder eines Dünnschicht-Photovoltaik-Moduls. Die elektrische Kontaktierung der elektrisch leitfähigen Beschichtung erfolgt typischerweise über einen Sammelleiter, beispielsweise aus einer aufgedruckten und eingebrannten Silberpaste. Der Sammelleiter kann mit der externen Zuleitung, beispielsweise einem Flachleiter, direkt oder auch über ein Kontaktband aus einer dünnen Kupferfolie elektrisch leitend verbunden sein. In herkömmlichen Verbundscheiben mit elektrischer Kontaktierung ist die Zuleitung oder das Kontaktband mit dem Sammelleiter über eine Lotmasse oder einen elektrisch leitfähigen Klebstoff verbunden. Das Anlöten oder Ankleben ist dabei ein eigener Prozessschritt im Fertigungsablauf und erschwert daher die Herstellung der Verbundscheiben.

Die Druckschriften DE 41 26 533 A1 und DE 198 29 151 C1 zeigen jeweils eine Verbundscheibe, bei der ein Sammelleiter auf eine darunter liegende Struktur aufgelötet ist.

Die Aufgabe der vorliegenden Erfindung besteht darin, eine verbesserte Verbundscheibe mit elektrischer Kontaktierung bereitzustellen, die einfach und kostengünstig herzustellen ist.

Die Aufgabe der vorliegenden Erfindung wird erfindungsgemäß durch eine Verbundscheibe mit elektrischer Kontaktierung gemäß Anspruch 1 gelöst. Bevorzugte Ausführungen gehen aus den Unteransprüchen hervor.

Die erfindungsgemäße Verbundscheibe mit elektrischer Kontaktierung umfasst zumindest die folgenden Merkmale:
- eine erste Scheibe und eine zweite Scheibe, die über eine thermoplastische Zwischenschicht flächenmäßig miteinander verbunden sind,
- mindestens eine elektrisch leitfähige Beschichtung mindestens auf der innenseitigen Oberfläche der ersten Scheibe,
- mindestens einen Sammelleiter auf einem Bereich der elektrisch leitfähigen Beschichtung und
- mindestens ein elektrisch leitfähiges Kontaktband auf mindestens einem Bereich des Sammelleiters,
wobei das Kontaktband mit mindestens einer elektrischen Zuleitung verbunden ist und zumindest ein Bereich des Kontaktbandes mit dem Sammelleiter in direktem Kontakt steht.

Die erste Scheibe und die zweite Scheibe weisen jeweils eine innenseitige Oberfläche und eine außenseitige Oberfläche auf. Die innenseitigen Oberflächen der ersten und der zweiten Scheibe sind einander zugewandt und über die thermoplastische Zwischenschicht miteinander verbunden. Die außenseitigen Oberflächen der ersten und der zweiten Scheibe sind voneinander und von der thermoplastischen Zwischenschicht abgewandt. Die elektrisch leitfähige Beschichtung ist auf der innenseitigen Oberfläche der ersten Scheibe aufgebracht. Natürlich kann auch auf der innenseitigen Oberfläche der zweiten Scheibe eine weitere elektrisch leitfähige Beschichtung aufgebracht sein. Auch die außenseitigen Oberflächen der Scheiben können Beschichtungen aufweisen. Die Begriffe "erste Scheibe" und "zweiten Scheibe" sind zur Unterscheidung der beiden Scheiben der Verbundscheibe gewählt. Mit den Begriffen ist keine Aussage über die geometrische Anordnung verbunden. Ist die erfindungsgemäße Verbundscheibe beispielsweise dafür vorgesehen, in einer Öffnung, beispielsweise eines Fahrzeugs oder eines Gebäudes, den Innenraum gegenüber der äußeren Umgebung abzutrennen, so kann die ersten Scheibe dem Innenraum oder der äußeren Umgebung zugewandt sein.

Der besondere Vorteil der Erfindung besteht darin, dass zumindest ein Bereich des Kontaktbandes mit dem Sammelleiter in direktem Kontakt steht. Die elektrisch leitende Verbindung zwischen Sammelleiter und Kontaktband erfolgt also nicht über eine anschmelzende Lotmasse oder einen elektrisch leitfähigen Kleber, sondern durch den unmittelbaren Kontakt des Kontaktbands mit dem Sammelleiter. Dadurch wird die Herstellung der Verbundscheibe deutlich vereinfacht, weil ein sonst notwendiger Verfahrensschritt, beispielsweise das Anlöten oder Ankleben des Kontaktbandes auf dem Sammelleiter entfällt. Der Fertigungsprozess ist schneller und es können Personalkosten, Anlagenkosten und Investitionen eingespart werden. Zudem werden Beschädigungen des Sammelleiters, wie sie beispielsweise beim Löten oder bei mechanischer Belastung einer gelöteten oder geklebten Verbindung auftreten können, vorteilhaft vermieden.

Mit direktem Kontakt wird im Sinne der Erfindung ein Kontakt ohne mechanische Verbindung (etwa durch Kleben oder Löten) bezeichnet. Zwischen dem Sammelleiter und dem Bereich des Kontaktbandes liegt also keine mechanische Verbindung vor, insbesondere keine Verbindung über eine Lotmasse oder einen Klebstoff.

Erfindungsgemäß ist der Sammelleiter oberhalb der elektrisch leitfähigen Beschichtung angeordnet und das Kontaktband oberhalb des Sammelleiters. Das bedeutet, dass der Sammelleiter auf der von der mit der Beschichtung versehenen Scheibenoberfläche abgewandten Oberfläche der elektrisch leitfähigen Beschichtung angeordnet ist und das Kontaktband auf der von der elektrisch leifähigen Beschichtung abgewandten Oberfläche des Sammelleiters.

Der Sammelleiter (gelegentlich auch als Stromsammelschiene oder "bus bar" bezeichnet) dient der Ausbildung eines homogenen elektrischen Feldes in der elektrisch leitfähigen Beschichtung. Dazu ist der Sammelleiter bevorzugt im Randbereich der elektrisch leitfähigen Beschichtung entlang einer Seitenkante auf der elektrisch leitfähigen Beschichtung angeordnet. Die Länge des Sammelleiters ist typischerweise im Wesentlichen gleich der Länge der Seitenkante der elektrisch leitfähigen Beschichtung, kann aber auch leicht größer oder kleiner sein. Es können auch zwei Sammelleiter auf der elektrisch leitfähigen Beschichtung angeordnet sein, bevorzugt im Randbereich entlang zweier gegenüberliegenden Seitenkanten der elektrisch leitfähigen Beschichtung. Dies ist beispielsweise dann der Fall, wenn die elektrisch leitfähige Beschichtung eine elektrisch beheizbare Beschichtung ist, durch die ein Strom fließen soll. Es können auch mehr als zwei Sammelleiter auf der elektrisch leitfähigen Beschichtung angeordnet sein, beispielsweise um zwei oder mehrere unabhängige Heizfelder in einer elektrisch beheizbaren Beschichtung auszubilden.

Die Breite des Sammelleiters beträgt bevorzugt von 2 mm bis 30 mm, besonders bevorzugt von 4 mm bis 20 mm. Schmälere Sammelleiter führen zu einen zu hohen elektrischen Widerstand und damit zu einer zu hohen Erwärmung des Sammelleiters im Betrieb. Breitere Sammelleiter erfordern einen unerwünscht hohen Materialeinsatz und einer zu großen und unästhetischen Einschränkung des Durchsichtbereichs der Verbundscheibe. Die Länge des Sammelleiters richtet sich nach der Ausdehnung der elektrisch leitfähigen Beschichtung.

Beim Sammelleiter, der typischerweise in Form eines Streifens ausgebildet ist, wird die längere seiner Dimensionen als Länge und die weniger lange seiner Dimensionen als Breite bezeichnet.

In einer bevorzugten Ausgestaltung ist der Sammelleiter als aufgedruckte und eingebrannte leitfähige Struktur ausgebildet. Der aufgedruckte Sammelleiter enthält zumindest ein Metall, bevorzugt Silber. Die elektrische Leitfähigkeit wird bevorzugt über Metallpartikel, enthalten im Sammelleiter, besonders bevorzugt über Silberpartikel, realisiert. Die Metallpartikel können sich in einer organischen und / oder anorganischen Matrix wie Pasten oder Tinten befinden, bevorzugt als gebrannte Siebdruckpaste mit Glasfritten. Die Schichtdicke des aufgedruckten Sammelleiters beträgt bevorzugt von 5 µm bis 40 µm, besonders bevorzugt von 8 µm bis 20 µm und ganz besonders bevorzugt von 10 µm bis 15 µm. Aufgedruckte Sammelleiter mit diesen Dicken sind technisch einfach zu realisieren und weisen eine vorteilhafte Stromtragfähigkeit auf.

Alternativ kann der Sammelleiter aber auch als Streifen einer elektrisch leitfähigen Folie ausgebildet sein. Der Sammelleiter enthält dann beispielsweise zumindest Aluminium, Kupfer, verzinntes Kupfer, Gold, Silber, Zink, Wolfram und/oder Zinn oder Legierungen davon. Der Streifen hat bevorzugt eine Dicke von 10 µm bis 500 µm, besonders bevorzugt von 30 µm bis 300 µm. Sammelleiter aus elektrisch leitfähigen Folien mit diesen Dicken sind technisch einfach zu realisieren und weisen eine vorteilhafte Stromtragfähigkeit auf. Der Streifen kann mit der elektrisch leitfähigen Struktur beispielsweise über eine Lotmasse, über einen elektrisch leitfähigen Kleber oder durch direktes Auflegen elektrisch leitend verbunden sein.

Der Sammelleiter kann aber auch beispielsweise aus der elektrisch leitfähigen Beschichtung durch Einbringen von Ultraschalllötpunkten ausgebildet werden. Typischerweise wird eine Reihe von Ultraschalllötpunkten in die elektrisch leitfähige Beschichtung eingebracht, welche über das Kontaktband miteinander verbunden werden, wobei jeder Ultraschalllötpunkt die Funktion eines Sammelleiters erfüllt.

Das Kontaktband kann auch mit mehreren Sammelleitern in direktem Kontakt stehen.

Das Kontaktband, das auch als Kontaktelektrode bezeichnet werden kann, erhöht vorteilhaft die Stromtragfähigkeit des Sammelleiters. Außerdem kann durch das Kontaktband eine unerwünschte Erhitzung der Kontaktstelle zwischen Sammelleiter und Zuleitung verringert werden. Zudem vereinfacht das Kontaktband die elektrische Kontaktierung des Sammelleiters durch die elektrische Zuleitung, weil die Zuleitung nicht mit dem bereits aufgebrachten Sammelleiter verbunden, beispielsweise verlötet werden muss.

Das Kontaktband enthält bevorzugt zumindest ein Metall, besonders bevorzugt Kupfer, verzinntes Kupfer, Silber, Gold, Aluminium, Zink, Wolfram und / oder Zinn. Das ist besonders vorteilhaft im Hinblick auf die elektrische Leitfähigkeit des Kontaktbandes. Das Kontaktband kann auch Legierungen enthalten, welche bevorzugt eines oder mehrere der genannten Elemente und gegebenenfalls weitere Elemente enthält, beispielsweise Messing oder Bronze.

Das Kontaktband ist bevorzugt als Streifen einer dünnen, elektrisch leitfähigen Folie ausgebildet. Die Dicke des Kontaktbandes beträgt bevorzugt von 10 µm bis 500 µm, besonders bevorzugt von 15 µm bis 200 µm, ganz besonders bevorzugt von 50 µm bis 100 µm. Folien mit diesen Dicken sind technisch einfach herzustellen und leicht verfügbar und weisen zudem einen vorteilhaft geringen elektrischen Widerstand auf.

Die Länge des Kontaktbandes kann prinzipiell gleich der Länge des Sammelleiters sein und entlang der gesamten Länge des Sammelleiters auf diesem angeordnet sein. Verteilhafterweise weist das Kontaktband jedoch eine geringe Länge auf als der Sammelleiter. Dadurch ist das Kontaktband leichter zu handhaben, so dass die Gefahr von Beschädigungen und Verknickungen des Kontaktbandes vermindert wird, und zudem kann Material eingespart werden. Die Länge des Kontaktbandes beträgt bevorzugt von 10 mm bis 100 mm, besonders bevorzugt von 20 mm bis 60 mm. Das ist besonders vorteilhaft im Hinblick auf eine gute Handhabbarkeit des Kontaktbandes sowie auf eine zur elektrischen Kontaktierung ausreichend große Kontaktfläche zwischen Sammelleiter und Kontaktband.

In einer alternativen bevorzugten Ausgestaltung beträgt die Länge des Kontaktbandes von 80 % bis 120 %, bevorzugt von 90 % bis 110 % der Länge des Sammelleiters. Durch ein solches Kontaktband wird die Stromtragfähigkeit des Sammelleiters vorteilhaft erhöht. Der Sammelleiter wird gleichsam entlastet, so dass lokale Überhitzungen vermieden werden können.

Der insgesamt sinnvolle Bereich für die Länge des Kontaktbandes beträgt also etwa von 10 cm bis 120 % der Länge des Sammelleiters.

Die Breite des Kontaktbandes beträgt bevorzugt von 2 mm bis 40 mm, besonders bevorzugt von 5 mm bis 30 mm. Das ist besonders vorteilhaft im Hinblick auf die Kontaktfläche zwischen Kontaktband und Sammelleiter und eine einfache Verbindung des Kontaktbandes mit der elektrischen Zuleitung. Die Ausdrücke Länge und Breite des Kontaktbandes bezeichnen jeweils die Abmessung in der gleichen Ausbreitungsrichtung, durch die die Länge beziehungsweise Breite des Sammelleiters gegeben ist.

In einer Alternative der Erfindung steht das Kontaktband vollflächig mit der Sammelschiene in direktem Kontakt. Dazu wird ein Kontaktband, dessen Länge und Breite höchstens der Länge und Breite des Sammelleiters entsprechen, typischerweise aber kleiner sind als die Länge und Breite des Sammelleiters auf den Sammelleiter aufgelegt. Der besondere Vorteil liegt in einer einfachen Herstellung der Verbundscheibe und der Ausnutzung der gesamten Fläche des Kontaktbandes als Kontaktfläche.

In einer weiteren Alternative der Erfindung weist das Kontaktband eine größere Breite auf als der Sammelleiter. Das Kontaktband ragt dabei über zumindest eine Seitenkante des Sammelleiters hinaus, bevorzugt über zwei gegenüberliegende Seitenkanten des Sammelleiters. Im Bereich des Sammelleiters steht das Kontaktband bevorzugt vollflächig mit dem Sammelleiter in direktem Kontakt. Der besondere Vorteil besteht darin, dass die gesamte Breite des Sammelleiters als Kontaktierungsfläche ausgenutzt wird. Zudem können Spannungen oder Belastungen, welche sich im Bereich der Seitenkanten des Kontaktbandes ausbilden können, wenn diese Seitenkanten auf dem Sammelleiter angeordnet sind, vermindert werden.

Das Kontaktband und ein elektrisches Verbindungselement können zweistückig ausgebildet sein, beispielsweise jeweils als Streifen einer elektrisch leitfähigen Folie.

Die Kontaktfläche zwischen dem Sammelleiter und dem Kontaktband sollte größer oder gleich 150 mm² betragen, besonders bevorzugt größer oder gleich 300 mm², insbesondere wenn die elektrisch leitfähige Beschichtung eine beheizbare Beschichtung oder eine Flächenelektrode ist. Damit wird eine vorteilhafte Übertragung des Stromflusses erreicht. Die Kontaktfläche kann kleiner oder gleich 600 mm² sein. Ist die elektrisch leitfähige Beschichtung beispielsweise eine Antennenstruktur, so kann die Kontaktfläche deutlich kleiner gewählt werden und sollte größer oder gleich 20 mm² betragen.

Erfindungsgemäß ist mindestens ein Kontaktband auf dem Sammelleiter angeordnet. Es können aber auch mehr als ein Kontaktband, beispielsweise zwei Kontaktbänder auf jeweils einem Bereich desselben Sammelleiters angeordnet sein. Dies kann erwünscht sein, um den Stromdurchfluss durch die mit den Kontaktbändern verbundenen Zuleitungen zu vermindern, was zu einer verminderten thermischen Belastung der Verbundscheibe in den Bereichen der einzelnen Kontaktbänder führt.

Das Kontaktband kann einfach auf den Sammelleiter aufgelegt sein und wird innerhalb der laminierten Verbundscheibe dauerhaft stabil an der vorgesehenen Position fixiert.

Alternativ kann das Kontaktband mittels eines Klebebandes auf dem Sammelleiter fixiert werden. Das Klebeband weist dabei zumindest einen Bereich auf, der auf der vom Sammelleiter abgewandten Oberfläche des Kontaktbandes angeordnet ist, und zumindest einen weiteren Bereich, der auf der Oberfläche der Scheibe, auf der elektrisch leitfähigen Struktur oder auf dem Sammelleiter angeordnet ist. Durch das Klebeband wird ein Druck auf das Kontaktband in Richtung des Sammelleiters ausgeübt. Dadurch wird die elektrisch leitende Verbindung zwischen Kontaktband und Sammelleiter vorteilhaft stabilisiert. Zudem weist die Verwendung des Klebebandes verfahrenstechnische Vorteile auf, weil das Kontaktband bei der Herstellung der Verbundscheibe auf dem Sammelleiter fixiert werden kann und somit nicht beispielsweise unbeabsichtigt verschoben, verknickt oder anderweitig beschädigt werden kann. Die Länge und / oder die Breite des Klebebands kann größer gewählt sein als die Länge beziehungsweise die Breite des Kontaktbandes, so dass das Klebeband an zumindest zwei gegenüberliegenden Kanten über das Kontaktband hinausragt. Eine solche Ausgestaltung hat den Vorteil, dass durch das über die Seitenkanten des Kontaktbands hinausragende und mit der Scheibenoberfläche, dem Sammelleiter oder der elektrisch leitfähigen Struktur verbundene Klebeband verhindert wird, dass bei der Herstellung der Verbundscheibe aufgeschmolzenes thermoplastisches Material der Zwischenschicht zwischen Sammelleiter und Kontaktband fließt und die elektrische Verbindung stört. Es können aber auch ein oder mehrere Löcher in das Kontaktband eingebracht sein, innerhalb derer das Klebeband an den Sammelleiter angeklebt ist. Eine solche Ausgestaltung hat den Vorteil, dass die Abmessungen des Klebebands kleiner oder gleich den Abmessungen des Kontaktbandes gewählt werden kann, so dass das Klebeband nicht über die Kanten des Kontaktbandes hinausragt, was beispielsweise aus ästhetischen Gründen gewünscht sein kann.

In einer vorteilhaften Ausgestaltung ist zwischen dem Kontaktband und der zweiten Scheibe ein Andruckelement angeordnet. Das Andruckelement kann beispielsweise zwischen Kontaktband und thermoplastischer Zwischenschicht angeordnet sein, oder auch zwischen thermoplastischer Zwischenschicht und zweiter Scheibe oder zwischen zwei Folien der Zwischenschicht im Bereich des Kontaktbandes. Das Andruckelement ist geeigneterweise starr, weist also eine geringe Elastizität auf. Durch das Andruckelement innerhalb der Verbundscheibe wird ein zusätzlicher Druck auf das Kontaktband in Richtung des Sammelleiters ausgeübt. Dadurch wird die elektrisch leitende Verbindung zwischen Kontaktband und Sammelleiter vorteilhaft stabilisiert.

Das Andruckelement kann beispielsweise zumindest ein Polymer enthalten, beispielsweise Polycarbonat (PC) oder Polymethylmethacrylat (PMMA). Das Andruckelement kann aber auch zumindest ein Metall oder eine Legierung enthalten, beispielsweise Kupfer oder Stahl. Die Dicke des Andruckelements beträgt bevorzugt größer oder gleich 200 µm. Die obere Grenze für die Dicke des Andruckelements ergibt sich letzten Endes durch den gewünschten Abstand zwischen der ersten und der zweiten Scheibe. Die Dicke des Andruckelements kann beispielsweise von 200 µm bis 700 µm betragen. Die minimale Länge und Breite des Andruckelements richten sich nach dem gewünschten Kontaktbereich zwischen Sammelleiter und Kontaktband. Das Andruckelement weist beispielsweise eine Länge von 10 mm bis 100 mm oder von 20 mm bis 60 mm und eine Breite von 2 mm bis 40 mm oder von 5 mm bis 30 mm auf.

Das Andruckelement kann einfach bei der Herstellung der Verbundscheibe an geeigneter Position in den Verbund eingelegt werden. Das Andruckelement kann aber auch auf dem Kontaktband oder auf der innenseitigen Oberfläche der zweiten Scheibe fixiert werden, beispielsweise mittels eines doppelseitigen Klebebands.

Ein Andruckelement kann auch einstückig mit dem Kontaktband ausgebildet sein. Das Kontaktband wird dabei durch einen Abschnitt eines Folienstreifens gebildet, wobei zumindest ein umgebogener Abschnitt, bevorzugt mehrere umgebogene und übereinander gefaltete Abschnitte des Folienstreifens das Andruckelement bilden.

Die elektrisch leitfähige Beschichtung kann prinzipiell jede Beschichtung sein, die elektrisch kontaktiert werden soll. Soll die erfindungsgemäße Verbundscheibe die Durchsicht ermöglichen, wie es beispielsweise bei Verbundscheiben im Fensterbereich der Fall ist, so ist die elektrisch leitfähige Beschichtung bevorzugt im sichtbaren Spektralbereich transparent. Eine transparente Beschichtung weist im Sinne der Erfindung eine Transmission im sichtbaren Spektralbereich von größer 70%, bevorzugt größer 85 % auf. In einer vorteilhaften Ausgestaltung ist die elektrisch leitfähige Beschichtung eine Schicht oder ein Schichtaufbau mehrere Einzelschichten mit einer Gesamtdicke von kleiner oder gleich 2 µm, besonders bevorzugt kleiner oder gleich 1 µm.

Die elektrisch leitfähige Beschichtung kann beispielsweise eine elektrisch beheizbare Beschichtung sein, durch welche die Verbundscheibe mit einer Heizfunktion versehen wird. Solche beheizbaren Beschichtungen sind dem Fachmann an sich bekannt. Sie enthalten typischerweise eine oder mehrere, beispielsweise zwei, drei oder vier elektrisch leitfähige, funktionelle Schichten. Die funktionellen Schichten enthalten bevorzugt zumindest ein Metall, beispielsweise Silber, Gold, Kupfer, Nickel und oder Chrom, oder eine Metalllegierung. Die funktionellen Schichten enthalten besonders bevorzugt mindestens 90 Gew. % des Metalls, insbesondere mindestens 99,9 Gew. % des Metalls. Die funktionellen Schichten können aus dem Metall oder der Metalllegierung bestehen. Die funktionellen Schichten enthalten besonders bevorzugt Silber oder eine silberhaltige Legierung. Solche funktionelle Schichten weisen eine besonders vorteilhafte elektrische Leitfähigkeit bei gleichzeitiger hoher Transmission im sichtbaren Spektralbereich auf. Die Dicke einer funktionellen Schicht beträgt bevorzugt von 5 nm bis 50 nm, besonders bevorzugt von 8 nm bis 25 nm. In diesem Bereich für die Dicke der funktionellen Schicht wird eine vorteilhaft hohe Transmission im sichtbaren Spektralbereich und eine besonders vorteilhafte elektrische Leitfähigkeit erreicht.

Typischerweise ist jeweils zwischen zwei benachbarten funktionellen Schichten der beheizbaren Beschichtung zumindest eine dielektrische Schicht angeordnet. Bevorzugt ist unterhalb der ersten und / oder oberhalb der letzten funktionellen Schicht eine weitere dielektrische Schicht angeordnet. Eine dielektrische Schicht enthält zumindest eine Einzelschicht aus einem dielektrischen Material, beispielsweise enthaltend ein Nitrid wie Siliziumnitrid oder ein Oxid wie Aluminiumoxid. Dielektrische Schicht können aber auch mehrere Einzelschichten umfassen, beispielsweise Einzelschichten eines einem dielektrischen Material, Glättungsschichten, Anpassungsschichten, Blockerschichten und / oder Antireflexionsschichten. Die Dicke einer dielektrischen Schicht beträgt beispielsweise von 10 nm bis 200 nm.

Die elektrisch leitfähige Beschichtung kann aber auch eine Flächenelektrode sein, beispielsweise die Flächenelektrode eines an sich bekannten Photovoltaik-Moduls, bevorzugt Dünnschicht-Photovoltaikmoduls, oder die Flächenelektrode einer Verbundscheibe mit elektrisch schaltbaren oder regelbaren optischen Eigenschaften. Solche Verbundscheiben enthalten elektrisch schaltbare oder regelbare Funktionselemente, beispielsweise SPD- (suspended particle device), PDLC- (polymer dispersed liquid crystal), elektrochrome oder elektrolumineszente Funktionselemente und sind dem Fachmann an sich bekannt. Die Flächenelektroden enthalten zumindest ein Metall, eine Metalllegierung oder ein transparentes leitfähiges Oxid (transparent conducting oxide, TCO), beispielsweise Silber, Molybdän, Indium-Zinnoxid (ITO) oder Aluminium-dotiertes Zinkoxid, und weisen Schichtdicken beispielsweise von 200 nm bis 2 µm auf. Die elektrisch leitfähige Beschichtung kann auch eine polymere elektrisch leitfähige Beschichtung sein, beispielsweise enthaltend zumindest ein konjugiertes Polymer oder ein mit leitfähigen Partikeln versehenes Polymer.

Die elektrisch beheizbare Beschichtung kann auch eine Beschichtung mit Antennenfunktion sein.

Die elektrisch leitfähige Beschichtung ist bevorzugt eine elektrisch beheizbare Beschichtung, eine Flächenelektrode oder eine Antenne und ist bevorzugt transparent.

Die elektrisch leitfähige Beschichtung kann sich über die gesamte innenseitige Oberfläche der ersten Scheibe erstrecken. Die elektrisch leitfähige Beschichtung kann sich alternativ aber auch nur über einen Teil der innenseitigen Oberfläche der ersten Scheibe erstrecken. Die elektrisch leitfähige Beschichtung erstreckt sich bevorzugt über mindestens 50%, besonders bevorzugt über mindestens 70% und ganz besonders bevorzugt über mindestens 90% der innenseitigen Oberfläche der ersten Scheibe. Die elektrisch leitfähige Beschichtung kann sich aber über kleinere Anteile der innenseitigen Oberfläche der ersten Scheibe erstrecken, beispielsweise kleiner 50 %, kleiner 30 % oder kleiner 20 %. Das kann beispielsweise gewünscht sein, wenn nur ein kleiner Bereich der Verbundscheibe elektrisch beheizt werden soll.

In einer vorteilhaften Ausgestaltung weist die innenseitige Oberfläche der ersten Scheibe einen umlaufenden Randbereich mit einer Breite von 2 mm bis 50 mm, bevorzugt von 5 mm bis 20 mm auf, der nicht mit der elektrisch leitfähigen Beschichtung versehen ist. Die elektrisch leitfähige Beschichtung weist dann keinen Kontakt zur Atmosphäre auf und ist im Inneren der Verbundscheibe durch die thermoplastische Zwischenschicht vorteilhaft vor Beschädigungen und Korrosion geschützt. Die innenseitige Oberfläche der ersten Scheibe kann in einem oder mehreren weiteren Bereichen beschichtungsfrei sein. Ist die elektrisch leitfähige Beschichtung eine elektrisch heizbare Beschichtung, so sind dem Fachmann solche beschichtungsfreie Bereiche beispielsweise als Datenübertragungsfenster oder Kommunikationsfenster bekannt.

Die elektrische Zuleitung ist erfindungsgemäß mit dem Kontaktband verbunden. Die elektrische Zuleitung erstreckt sich ausgehend vom Kontaktband über eine Seitenkante der Verbundscheibe hinaus und dient der Verbindung des Kontaktbandes mit einem externen Funktionselement, beispielsweise einer Spannungsversorgung oder einem Empfangsgerät. Die elektrische Zuleitung ist bevorzugt als an sich bekannter flexibler Folienleiter (Flachleiter, Flachbandleiter) ausgebildet. Darunter wird ein elektrischer Leiter verstanden, dessen Breite deutlich größer ist als seine Dicke. Ein solcher Folienleiter ist beispielsweise ein Streifen oder Band enthaltend oder bestehend aus Kupfer, verzinntem Kupfer, Aluminium, Silber, Gold oder Legierungen davon. Der Folienleiter weist beispielsweise eine Breite von 2 mm bis 16 mm und eine Dicke von 0,03 mm bis 0,1 mm auf. Der Folienleiter kann eine isolierende, bevorzugt polymere Ummantelung, beispielsweise auf Polyimid-Basis aufweisen. Folienleiter, die sich zur Kontaktierung von elektrisch leitfähigen Beschichtungen in Verbundscheiben eignen, weisen lediglich eine Gesamtdicke von beispielsweise 0,3 mm auf. Derart dünne Folienleiter können ohne Schwierigkeiten zwischen den einzelnen Scheiben in der thermoplastischen Zwischenschicht eingebettet werden. In einem Folienleiterband können sich mehrere voneinander elektrisch isolierte, leitfähige Schichten befinden. Die elektrische Zuleitung wird bevorzugt mit dem Kontaktband verbunden, beispielsweise mittels einer Lotmasse oder eines elektrisch leitfähigen Klebstoffs, bevor das Kontaktband in die Verbundscheibe eingebracht wird. Das ist vorteilhaft im Hinblick auf eine stabile elektrische Verbindung zwischen Zuleitung und Kontaktband und auf eine einfache Herstellung der Verbundscheibe.

Alternativ können auch dünne Metalldrähte als elektrische Zuleitung verwendet werden. Die Metalldrähte enthalten insbesondere Kupfer, Wolfram, Gold, Silber oder Aluminium oder Legierungen mindestens zweier dieser Metalle. Die Legierungen können auch Molybdän, Rhenium, Osmium, Iridium, Palladium oder Platin enthalten.

Die erste Scheibe und die zweite Scheibe sind bevorzugt transparent. Die erste Scheibe und / oder die zweite Scheibe enthalten bevorzugt Glas, besonders bevorzugt Flachglas, Floatglas, Quarzglas, Borosilikatglas, Kalk-Natron-Glas oder klare Kunststoffe, vorzugsweise starre klare Kunststoffe, insbesondere Polyethylen, Polypropylen, Polycarbonat, Polymethylmethacrylat, Polystyrol, Polyamid, Polyester und / oder Polyvinylchlorid.

Als transparent wird im Sinne der Erfindung eine Scheibe beziehungsweise eine Beschichtung verstanden, die eine Transmission im sichtbaren Spektralbereich von größer 70 %, bevorzugt größer 85 % aufweist.

Die Dicken sowie die Größe der ersten Scheibe und der zweiten Scheibe können breit variieren und richten sich nach der vorgesehenen Verwendung der Verbundscheibe. Die erste Scheibe und / oder die zweite Scheibe weisen bevorzugt eine Dicke von 1,0 mm bis 25 mm, besonders bevorzugt von 1,4 mm bis 6 mm auf. Die erste Scheibe und die zweite Scheibe weisen beispielsweise im Fahrzeugbau und Architekturbereich übliche Flächen von 200 cm² bis zu 20 m² auf.

Die Verbundscheibe kann eine beliebige dreidimensionale Form aufweisen. Die Verbundscheibe ist bevorzugt plan oder leicht oder stark in einer Richtung oder in mehreren Richtungen des Raumes gebogen.

Die thermoplastische Zwischenschicht enthält zumindest einen thermoplastischen Kunststoff, bevorzugt Polyvinylbutyral (PVB), Ethylenvinylacetat (EVA) und / oder Polyethylenterephthalat (PET). Die thermoplastische Zwischenschicht kann aber auch beispielsweise Polyurethan (PU), Polypropylen (PP), Polyacrylat, Polyethylen (PE), Polycarbonat (PC), Polymethylmetacrylat, Polyvinylchlorid, Polyacetatharz, Gießharze, Acrylate, Fluorinierte Ethylen-Propylene, Polyvinylfluorid und / oder Ethylen-Tetrafluorethylen, oder Copolymere oder Gemische davon enthalten. Die thermoplastische Zwischenschicht kann durch eine oder auch durch mehrere übereinander angeordnete thermoplastische Folien ausgebildet werden, wobei die Dicke ein thermoplastischen Folie bevorzugt von 0,25 mm bis 1 mm beträgt, typischerweise 0,38 mm oder 0,76 mm.

Die Erfindung umfasst weiter ein Verfahren zur Herstellung einer Verbundscheibe mit elektrischer Kontaktierung, mindestens umfassend:
(a) Aufbringen einer elektrisch leitfähigen Beschichtung auf eine Oberfläche einer ersten Scheibe,
(b) Aufbringen mindestens eines Sammelleiters auf einem Bereich der elektrisch leitfähigen Beschichtung,
(c) Anordnen einer thermoplastischen Zwischenschicht auf der Oberfläche der ersten Scheibe und Anordnen einer zweiten Scheibe auf der thermoplastischen Zwischenschicht und Anordnen mindestens eines mit einer elektrischen Zuleitung verbundenen, elektrisch leitfähigen Kontaktbands, so dass zumindest ein Bereich des Kontaktbandes mit dem Sammelleiter in direktem Kontakt steht, und
(d) Verbinden der ersten Scheibe und der zweiten Scheibe über die thermoplastische Zwischenschicht.

Die Kennzeichnung der Verfahrensschritte durch Buchstaben soll dabei nicht zwingend eine Reihenfolge der Verfahrensschritte festlegen, sondern eine spätere Bezugnahme erleichtern. Es sind auch andere Reihenfolgen der Verfahrensschritte denkbar. Beispielsweise kann es im Einzelfall gewünscht sein, zunächst den Sammelleiter auf die Oberfläche der Scheibe aufzubringen und anschließend eine elektrisch leitfähige Beschichtung aufzubringen.

In einer ersten bevorzugten Ausführungsform des erfindungsgemäßen Verfahrens wird in Verfahrensschritt (c) das Kontaktband auf dem Sammelleiter angeordnet und die thermoplastische Zwischenschicht anschließend auf der Oberfläche der ersten Scheibe angeordnet.

Die erste bevorzugte Ausführungsform des erfindungsgemäßen Verfahrens umfasst dann zumindest die folgenden Verfahrensschritte:
(I) Aufbringen einer elektrisch leitfähigen Beschichtung auf eine Oberfläche einer ersten Scheibe,
(II) Aufbringen mindestens eines Sammelleiters auf einem Bereich der elektrisch leitfähigen Beschichtung,
(III) Anordnen mindestens eines mit einer elektrischen Zuleitung verbundenen, elektrisch leitfähigen Kontaktbands auf mindestens einem Bereich des Sammelleiters,
(IV) Anordnen einer thermoplastischen Zwischenschicht auf der Oberfläche der ersten Scheibe und Anordnen einer zweiten Scheibe auf der thermoplastischen Zwischenschicht,
(V) Verbinden der ersten Scheibe und der zweiten Scheibe über die thermoplastische Zwischenschicht.

In Verfahrensschritt (c) beziehungsweise (III) der ersten bevorzugten Ausführungsform kann das Kontaktband auf den Bereich des Sammelleiters aufgelegt werden. Alternativ kann das Kontaktband mittels eines doppelseitigen Klebebands auf dem Sammelleiter fixiert werden. Alternativ kann das Kontaktband mittels eines Klebebandes, welches über die vom Sammelleiter abgewandte Oberfläche des Kontaktbandes verläuft, auf dem Sammelleiter fixiert werden.

In einer zweiten bevorzugten Ausführungsform des erfindungsgemäßen Verfahrens wird in Verfahrensschritt (c) das Kontaktband an der thermoplastischen Zwischenschicht angebracht und die thermoplastische Zwischenschicht mit dem Kontaktband anschließend auf der Oberfläche der ersten Scheibe angeordnet.

Die zweite bevorzugte Ausführungsform des erfindungsgemäßen Verfahrens umfasst beispielsweise zumindest die folgenden Verfahrensschritte:
(I) Aufbringen einer elektrisch leitfähigen Beschichtung auf eine Oberfläche einer ersten Scheibe,
(II) Aufbringen mindestens eines Sammelleiters auf einem Bereich der elektrisch leitfähigen Beschichtung,
(III) Anbringen mindestens eines mit einer elektrischen Zuleitung verbundenen, elektrisch leitfähigen Kontaktbands an einer thermoplastischen Zwischenschicht,
(IV) Anordnen der thermoplastischen Zwischenschicht auf der Oberfläche der ersten Scheibe und Anordnen einer zweiten Scheibe auf der thermoplastischen Zwischenschicht,
(V) Verbinden der ersten Scheibe und der zweiten Scheibe über die thermoplastische Zwischenschicht.

Die Verfahrensschritte (I), (II) und (III) können alternativ auch in einer anderen zeitlichen Reihenfolge erfolgen. Das Anbringen des Kontaktbandes an der thermoplastischen Zwischenschicht kann zeitlich vor oder nach oder zeitgleich mit dem Aufbringen der elektrisch leitfähigen Beschichtung auf die erste Scheibe erfolgen. Das Anbringen des Kontaktbandes an der thermoplastischen Zwischenschicht kann zeitlich vor oder nach oder zeitgleich mit dem Aufbringen des Sammelleiters auf der elektrisch leitfähigen Beschichtung erfolgen.

Der Vorteil der zweiten bevorzugten Ausführungsform besteht im Anbringen des Kontaktbandes an der thermoplastischen Zwischenschicht. Dadurch kann das Kontaktband an der gewünschten Position fixiert werden und es besteht nicht die Gefahr, dass das Kontaktband beim Anordnen der thermoplastischen Schicht verschoben wird. Dies ist insbesondere vorteilhaft, wenn die thermoplastische Schicht eine komplexe Form aufweist, beispielsweise mit Löchern oder Aussparungen. Dies ist beispielsweise bei modernen Windschutzscheiben häufig der Fall. Die thermoplastische Zwischenschicht muss dann häufig auf der ersten Scheibe verschoben werden muss, um korrekt positioniert zu werden. Dadurch, dass das Kontaktband an geeigneter Position an der thermoplastischen Zwischenschicht angebracht ist, steht es mit dem Sammelleiter in elektrischem Kontakt, sobald die thermoplastische Zwischenschicht korrekt positioniert ist. Die Herstellung der Verbundscheibe wird dadurch vorteilhaft vereinfacht und beschleunigt.

Das mit der elektrischen Zuleitung verbundene Kontaktband wird natürlich so an der thermoplastischen Zwischenschicht angebracht, dass die elektrische Zuleitung zwischen thermoplastischer Schicht und Kontaktband angeordnet ist und sich ausgehend vom Kontaktband über die Seitenkante der thermoplastischen Schicht hinaus erstreckt.

Das Anbringen des Kontaktbandes an der thermoplastischen Zwischenschicht kann durch ein örtlich begrenztes Erwärmen der thermoplastischen Zwischenschicht erfolgen, beispielsweise mittels eines Handlötkolbens. Der erwärmte und dadurch erweichte Bereich der thermoplastischen Zwischenschicht weist adhäsive Eigenschaften auf, so dass das Kontaktband an die thermoplastische Zwischenschicht angeklebt werden kann und im wieder erkalteten Zustand dauerhaft stabil an der thermoplastischen Zwischenschicht angebracht ist.

In Verfahrenschritt (IV) der zweiten bevorzugten Ausführungsform wird die thermoplastische Zwischenschicht natürlich so angeordnet, dass diejenige ihrer Oberflächen, an welche das Kontaktband angebracht ist, der ersten Scheibe zugewandt ist.

Die folgenden Ausführungen beziehen sich auf die erste und die zweite bevorzugte Ausführungsform des erfindungsgemäßen Verfahrens gleichermaßen.

Das Aufbringen der elektrisch leitfähigen Beschichtung in Verfahrensschritt (a) kann durch an sich bekannte Verfahren erfolgen, bevorzugt durch magnetfeldunterstützte Kathodenzerstäubung. Das ist besonders vorteilhaft im Hinblick auf eine einfache, schnelle, kostengünstige und gleichmäßige Beschichtung der ersten Scheibe. Die elektrisch leitfähige Beschichtung kann aber auch beispielsweise durch Aufdampfen, chemische Gasphasenabscheidung (chemical vapour deposition, CVD), plasmagestützte Gasphasenabscheidung (PECVD) oder durch nasschemische Verfahren aufgebracht werden.

Die erste Scheibe kann nach Verfahrensschritt (a) einer Temperaturbehandlung unterzogen werden. Dabei wird die erste Scheibe mit der elektrisch leitfähigen Beschichtung auf eine Temperatur von mindestens 200°C, bevorzugt mindestens 300°C erwärmt. Die Temperaturbehandlung kann der Erhöhung der Transmission und / oder der Verringerung des Flächenwiderstands der elektrisch leitfähigen Beschichtung dienen.

Die erste Scheibe kann nach Verfahrensschritt (a) gebogen werden, typischerweise bei einer Temperatur von 500 °C bis 700 °C. Da es technisch einfacher ist, eine plane Scheibe zu beschichten, ist dieses Vorgehen vorteilhaft, wenn die erste Scheibe gebogen werden soll. Alternativ kann die erste Scheibe aber auch vor Verfahrensschritt (a) gebogen werden, beispielsweise wenn die elektrisch leitfähige Beschichtung nicht dazu geeignet ist, einen Biegeprozess ohne Beschädigungen zu überstehen.

Das Aufbringen des Sammelleiters in Verfahrensschritt (b) erfolgt bevorzugt durch Aufdrucken und Einbrennen einer elektrisch leitfähigen Paste im Siebdruckverfahren oder in einem Inkjet-Verfahren. Alternativ kann der Sammelleiter als Streifen einer elektrisch leitfähigen Folie auf die elektrisch leitfähige Beschichtung aufgebracht, bevorzugt aufgelegt, angelötet oder angeklebt werden.

In Verfahrensschritt (c) wird die ersten Scheibe natürlich so angeordnet, dass diejenige ihrer Oberflächen, welche mit der elektrisch leitfähigen Beschichtung versehen ist, der thermoplastischen Zwischenschicht zugewandt ist. Die Oberfläche wird dadurch zur innenseitigen Oberfläche der ersten Scheibe.

In Verfahrensschritt (c) kann ein Andruckelement geeignet in den Verbund eingelegt oder beispielsweise durch Kleben mit dem Kontaktband oder der zweiten Scheibe oder der thermoplastischen Zwischenschicht verbunden werden.

Die thermoplastische Zwischenschicht wird bevorzugt als zumindest eine thermoplastische Folie bereitgestellt. Die thermoplastische Zwischenschicht kann durch eine einzelne oder auch durch zwei oder mehrere thermoplastische Folien, die flächenmäßig übereinander angeordnet werden, ausgebildet werden.

Das Verbinden von erster und zweiter Scheibe in Verfahrensschritt (d) erfolgt bevorzugt unter Einwirkung von Hitze, Vakuum und/oder Druck. Es können an sich bekannte Verfahren zur Herstellung einer Verbundscheibe verwendet werden.

Es können beispielsweise sogenannte Autoklavverfahren bei einem erhöhten Druck von etwa 10 bar bis 15 bar und Temperaturen von 130 °C bis 145 °C über etwa 2 Stunden durchgeführt werden. An sich bekannte Vakuumsack- oder Vakuumringverfahren arbeiten beispielsweise bei etwa 200 mbar und 130 °C bis 145 °C. Die erste Scheibe, die thermoplastische Zwischenschicht und die zweite Scheibe können auch in einem Kalander zwischen mindestens einem Walzenpaar zu einer Verbundscheibe verpresst werden. Anlagen dieser Art sind zur Herstellung von Verbundscheiben bekannt und verfügen normalerweise über mindestens einen Heiztunnel vor einem Presswerk. Die Temperatur während des Pressvorgangs beträgt beispielsweise von 40 °C bis 150 °C. Kombinationen von Kalander- und Autoklavverfahren haben sich in der Praxis besonders bewährt. Alternativ können Vakuumlaminatoren eingesetzt werden. Diese bestehen aus einer oder mehreren beheizbaren und evakuierbaren Kammern, in denen erste Scheibe und zweite Scheibe innerhalb von beispielsweise etwa 60 Minuten bei verminderten Drücken von 0,01 mbar bis 800 mbar und Temperaturen von 80°C bis 170°C laminiert werden können.

Die Erfindung umfasst weiter die Verwendung der erfindungsgemäßen Verbundscheibe mit elektrischer Kontaktierung in Gebäuden, insbesondere im Zugangsbereich, Fensterbereich, Dachbereich oder Fassadenbereich, als Einbauteil in Möbeln und Geräten, in Fortbewegungsmitteln für den Verkehr auf dem Lande, in der Luft oder zu Wasser, insbesondere in Zügen, Schiffen und Kraftfahrzeugen beispielsweise als Windschutzscheibe, Heckscheibe, Seitenscheibe und / oder Dachscheibe. Die Verbundscheibe wird bevorzugt als beheizbare Scheibe, als Scheibe mit Antennenfunktion, als Scheibe mit schaltbaren oder regelbaren optischen Eigenschaften oder als Photovoltaik-Modul, insbesondere Dünnschicht-Photovoltaik-Modul verwendet.

Im Folgenden wird die Erfindung anhand einer Zeichnung und Ausführungsbeispielen näher erläutert. Die Zeichnung ist eine schematische Darstellung und nicht maßstabsgetreu. Die Zeichnung schränkt die Erfindung in keiner Weise ein.

Es zeigen:
- Fig. 1: eine Draufsicht auf eine Ausgestaltung der erfindungsgemäßen Verbundscheibe mit elektrischer Kontaktierung,
- Fig. 2: einen Schnitt entlang A-A' durch die Verbundscheibe nach Fig. 1,
- Fig. 3: einen Schnitt entlang A-A' durch die weitere Ausgestaltung der erfindungsgemäßen Verbundscheibe,
- Fig. 4: einen Schnitt entlang A-A' durch die weitere Ausgestaltung der erfindungsgemäßen Verbundscheibe,
- Fig. 5: einen Schnitt entlang A-A' durch die weitere Ausgestaltung der erfindungsgemäßen Verbundscheibe,
- Fig. 6: eine Draufsicht auf eine weitere Ausgestaltung der Verbundscheibe, welche nicht Teil der Erfindung ist,
- Fig. 6a: eine Draufsicht auf eine weitere Ausgestaltung der erfindungsgemäßen Verbundscheibe,
- Fig. 7: ein detailliertes Flussdiagramm einer Ausführungsform des erfindungsgemäßen Verfahrens und
- Fig. 8: ein detailliertes Flussdiagramm einer weiteren Ausführungsform des erfindungsgemäßen Verfahrens.

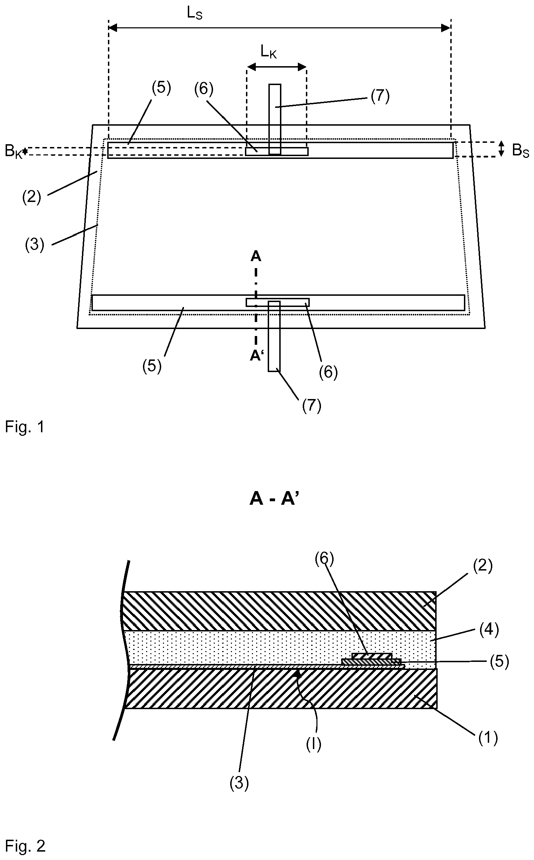

Fig. 1 und Fig. 2 zeigen je ein Detail einer Ausgestaltung der erfindungsgemäßen Verbundscheibe mit elektrischer Kontaktierung. Die transparente Verbundscheibe umfasst eine erste Scheibe 1 und eine zweite Scheibe 2, die über eine thermoplastische Zwischenschicht 4 miteinander verbunden sind. Die Verbundscheibe ist die Windschutzscheibe eines Personenkraftwagens, wobei die erste Scheibe dafür vorgesehen ist, in Einbaulage dem Innenraum zugewandt zu sein. Die erste Scheibe 1 und die zweite Scheibe 2 bestehen aus Natron-Kalkglas. Die Dicke der ersten Scheibe 1 beträgt 1,6 mm, die Dicke der zweiten Scheibe 2 beträgt 2,1 mm. Die thermoplastische Zwischenschicht 4 besteht aus Polyvinylbutyral (PVB) und weist eine Dicke von 0,76 mm auf. Auf der innenseitigen Oberfläche (I) der ersten Scheibe 1 ist eine elektrisch leitfähige Beschichtung 3 aufgebracht. Die elektrisch leitfähige Beschichtung 3 ist ein Schichtensystem, welches beispielsweise drei elektrisch leitfähige Silberschichten enthält, die durch dielektrische Schichten voneinander getrennt sind. Fließt ein Strom durch die elektrisch leitfähige Beschichtung 3, so wird sie infolge ihres elektrischen Widerstands erwärmt. Die elektrisch leitfähige Beschichtung 3 kann daher für eine aktive Beheizung der Verbundscheibe verwendet werden.

Die elektrisch leitfähige Beschichtung 3 erstreckt sich über die gesamte Oberfläche (I) der ersten Scheibe 1 abzüglich eines umlaufenden rahmenförmigen beschichtungsfreien Bereichs mit einer Breite von 8 mm. Der beschichtungsfreie Bereich dient der elektrischen Isolierung zwischen der spannungsführenden elektrisch leitfähigne Beschichtung 3 und der Fahrzeugkarosserie. Der beschichtungsfreie Bereich ist durch Verkleben mit der Zwischenschicht 4 hermetisch versiegelt, um die elektrisch leitfähige Beschichtung 3 vor Beschädigungen und Korrosion zu schützen.

Zur elektrischen Kontaktierung der elektrisch leitfähigen Beschichtung 3 ist jeweils ein Sammelleiter 5 im oberen und im unteren Randbereich auf der elektrisch leitfähigen Beschichtung angeordnet. Die Sammelleiter 5 enthalten Silberpartikel und Glasfritten und sind im Siebdruckverfahren aufgebracht. Jeder Sammelleiter weist eine Dicke von etwa 15 µm und eine Breite B_{S} von 16 mm auf. Die Länge L_{S} der Sammelleiter 5 entspricht annähernd der Ausdehnung der elektrisch leitfähigen Beschichtung 3. Wird an die Sammelleiter 5 eine elektrische Spannung angelegt, so fließt ein gleichmäßiger Strom durch die elektrisch leitfähige Beschichtung 3 zwischen den Sammelleitern 5. Auf jedem Sammelleiter ist ungefähr mittig ein Kontaktband 6 angeordnet. Das Kontaktband 6 dient der einfachen Verbindung des Sammelleiters 5 mit einer äußeren Zuleitung 7. Das Kontaktband 6 erhöht zudem vorteilhaft die Stromtragfähigkeit des Sammelleiters 5. Das Kontaktband 6 steht vollflächig in direktem Kontakt zum Sammelleiter 5. Das Kontaktband 6 wurde bei der Herstellung der Verbundscheibe auf den Sammelleiter 5 aufgelegt und wird durch die thermoplastische Schicht 4 dauerhaft stabil auf dem Sammelleiter 5 fixiert. Das Kontaktband 6 besteht aus Kupfer und weist eine Dicke von 100 µm, eine Breite B_{K} von 8 mm und eine Länge L_{K} von 5 cm auf.

Die äußere Zuleitung 7 ist ein an sich bekannter Folienleiter, welcher mit dem Kontaktband auf herkömmliche Weise verbunden ist, beispielsweise mittels einer Lotmasse oder eines elektrisch leitfähigen Klebstoffs. Der Folienleiter enthält eine verzinnte Kupferfolie mit einer Breite von 10 mm und einer Dicke von 0,3 mm. Über die elektrischen Zuleitungen 7 sind die Sammelleiter 5 über nicht dargestellte Verbindungskabel mit einer nicht dargestellten Spannungsquelle verbunden, welche für Kraftfahrzeuge übliche Bordspannungen, bevorzugt von 12 V bis 50 V, beispielsweise von 12 V bis 15 V (wie etwa 14 V), etwa 42 V oder etwa 48 V bereitstellt. Durch eine an sich bekannte opake Farbschicht als Abdeckdruck kann verhindert werden, dass der Bereich der Sammelleiter 5 für einen Betrachter sichtbar ist. Der Abdeckdruck kann beispielsweise auf der innenseitigen Oberfläche der zweiten Scheibe rahmenförmig aufgebracht sein.

Das Kontaktband 6 und der Sammelleiter 5 stehen erfindungsgemäß in direktem Kontakt. Die elektrische Verbindung erfolgt also nicht über eine Lotmasse oder einen elektrisch leitfähigen Klebstoff. Dadurch wird der Herstellungsprozess der Verbundscheibe entscheidend vereinfacht. Zudem kann die Gefahr von Beschädigungen des Sammelleiters 7, wie sie beispielsweise beim Löten oder bei Belastung einer gelöteten Verbindung besteht, vermieden werden.

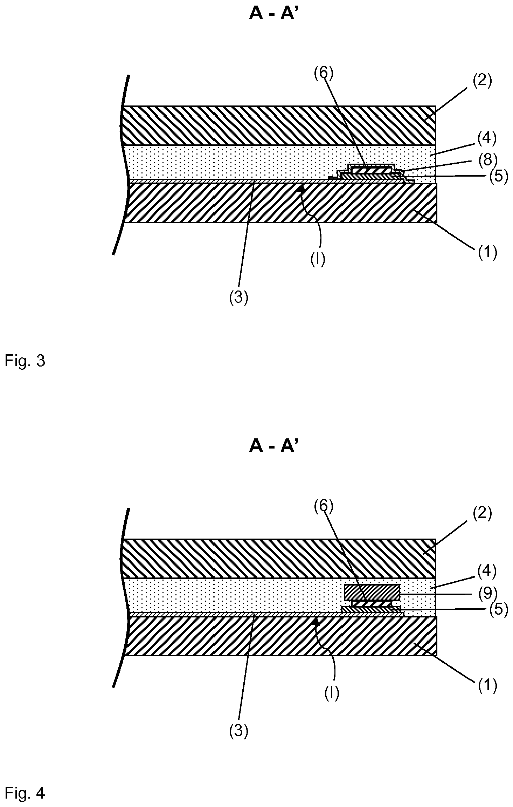

Fig. 3 zeigt einen Querschnitt durch eine alternative Ausgestaltung der erfindungsgemäßen Verbundscheibe im Bereich der unteren Kante. Die erste Scheibe 1 mit der elektrisch leitfähigen Beschichtung 3, die zweite Scheibe 2, die thermoplastische Zwischenschicht 4, die Sammelleiter 5, die Kontaktbänder 6 und die äußeren Zuleitungen 7 sind wie in Fig. 1 ausgestaltet. Zwischen dem Kontaktband 6 und der thermoplastischen Zwischenschicht 4 ist ein Klebeband 8 angeordnet. Mittels des Klebebands 7 ist das Kontaktband 6 auf der innenseitigen Oberfläche (I) der ersten Scheibe 1 fixiert. Das Klebeband 8 weist eine Breite von 2 cm und eine Länge von 5 cm auf. Das Klebeband 8 verläuft über die von der Sammelschiene 5 abgewandte Oberfläche des Kontaktbands 6, ragt über die langen Seitenkanten des Kontaktbandes 6 hinaus und ist mittels der hinausragenden Bereiche mit der ersten Scheibe 1 oder den auf der ersten Scheibe 1 aufgebrachten Schichten verklebt.

Der Vorteil des Klebebandes 8 liegt darin, dass ein zusätzlicher Druck auf das System aus Sammelleiter 5 und Kontaktband 6 ausgeübt wird. Dadurch wird die elektrisch leitende Verbindung zwischen dem Sammelleiter 5 und dem Kontaktband 6 zusätzlich stabilisiert. Die Verwendung des Klebebandes 8 hat darüber hinaus verfahrenstechnische Vorteile: durch das Klebeband 8 kann vor der Herstellung der Verbundscheibe das Kontaktband 6 stabil auf dem Sammelleiter 5 fixiert werden. Beim Anordnen der thermoplastischen Zwischenschicht 4 und der zweiten Scheibe 2 auf der ersten Scheibe 1 kann dadurch ein Verrutschen oder Beschädigungen des Kontaktbandes 6, beispielsweise durch Verknicken, vermieden werden.

Fig. 4 zeigt einen Querschnitt durch eine weitere Ausgestaltung der erfindungsgemäßen Verbundscheibe im Bereich der unteren Kante. Die erste Scheibe 1 mit der elektrisch leitfähigen Beschichtung 3, die zweite Scheibe 2, die thermoplastische Zwischenschicht 4, die Sammelleiter 5, die Kontaktbänder 6 und die äußeren Zuleitungen 7 sind wie in Fig. 1 ausgestaltet. Auf der vom Sammelleiter 5 abgewandten Oberfläche des Kontaktbandes 6 ist ein Andruckelement 9 angeordnet. Das Andruckelement 9 ist quaderförmig mit einer Dicke von 0,3 mm, einer Länge von 5 cm und einer Breite von 16 mm und besteht aus Polymethylmethacrylat (PMMA). Durch das starre Andruckelement 9 innerhalb des Verbundglases wird vorteilhaft ein zusätzlicher Druck auf das System aus Sammelleiter 5 und Kontaktband 6 ausgeübt. Dadurch wird die elektrisch leitende Verbindung zwischen dem Sammelleiter 5 und dem Kontaktband 6 zusätzlich stabilisiert.

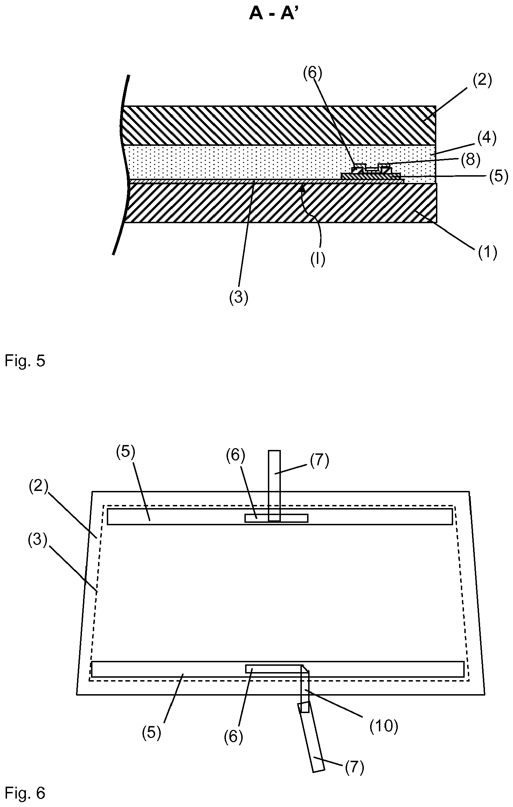

Fig. 5 zeigt einen Querschnitt durch eine weitere Ausgestaltung der erfindungsgemäßen Verbundscheibe im Bereich der unteren Kante. Das Kontaktband 6 weist beispielsweise drei kreisförmige Löcher auf, welche entlang seiner Länge angeordnet sind. Eines der Löcher ist in der Darstellung zu sehen. Auf der vom Sammelleiter abgewandten Oberfläche des Kontaktbandes ist ein Klebeband 8 angeordnet, welches durch die Löcher hindurch mit dem Sammelleiter 5 verklebt ist. Das Kontaktband 6 ist dadurch bereits bei der Herstellung der Verbundscheibe auf dem Sammelleiter 5 fixiert. Zudem wird durch das Klebeband 8 ein zusätzlicher Druck auf das Kontaktband 6 ausgeübt, welcher die elektrische Verbindung zwischen Kontaktband 6 und Sammelleiter 5 stabilisiert. Die Ausgestaltung des Kontaktbandes 6 mit Löchern hat den Vorteil, dass das Klebeband 8 kleiner dimensioniert sein kann als das Kontaktband 6. Es ragt dann nicht über die Seitenkanten des Kontaktbands 6 hinaus, was aus ästhetischen Gründen gewünscht sein kann.

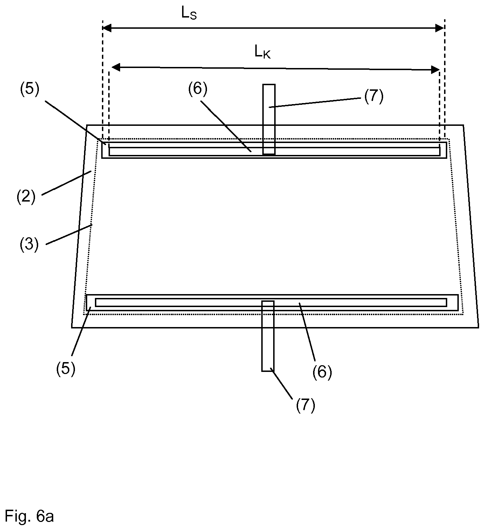

Fig. 6 zeigt eine Draufsicht auf eine weitere Ausgestaltung der Verbundscheibe, welche nicht Teil der Erfindung ist. Das Kontaktband 6 der unteren Sammelschiene 5 ist auf der Sammelschiene 5 angeordnet ist und steht mit der Sammelschiene 5 in direktem Kontakt. Einstückig mit dem Kontaktband 6 ist ein elektrisches Verbindungselement 10 ausgebildet. Das Kontaktband 6 und das elektrische Verbindungselement 10 sind Abschnitte desselben Streifens einer elektrisch leitfähigen Folie. Durch Umknicken des Streifens ist eine Richtungsänderung realisiert, so dass das Kontaktband 6 parallel zum Sammelleiter 5 verläuft und das Verbindungselement 10 ausgehend vom Sammelleiter 5 über die Seitenkante der Verbundscheibe hinaus verläuft. Außerhalb der Verbundscheibe ist das Verbindungselement 10 mit der elektrischen Zuleitung 7 verbunden. Die Verbindung zwischen elektrischer Zuleitung 7 und Verbindungselement 10 kann in dieser Ausgestaltung vor oder nach dem Laminieren der ersten mit der zweiten Scheibe erfolgen.

Fig. 6a zeigt eine Draufsicht auf eine weitere Ausgestaltung der erfindungsgemäßen Verbundscheibe. Im Unterschied zu dem Ausführungsbeispiel aus Figur ein beträgt die Länge L_{K} der Kontaktbänder 6 etwa 95 % der Länge L_{S} der Sammelleiter 5. Die Kontaktbänder 6 bedecken die Sammelleiter 5 also nahezu entlang ihrer gesamten Länge, so dass die Stromtragfähigkeit der Sammelleiter 5 signifikant erhöht wird. Überhitzungen der Sammelleiter 5 aufgrund größer lokaler Stromstärken können somit vermieden werden.

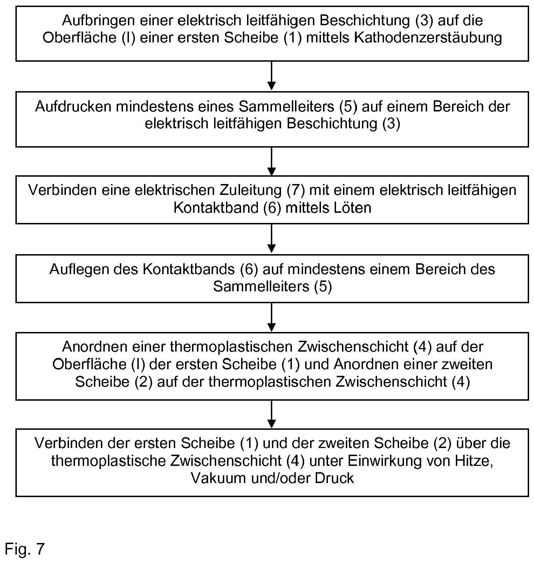

Fig. 7 zeigt ein Flussdiagramm eines Ausführungsbeispiels des erfindungsgemäßen Verfahrens zur Herstellung einer Verbundscheibe mit elektrischer Kontaktierung.

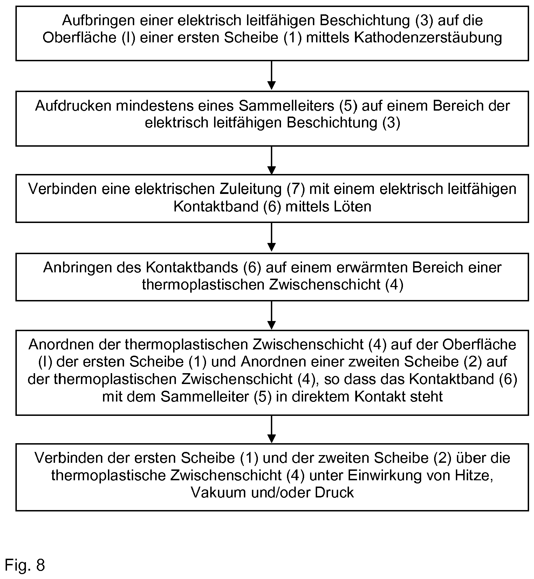

Fig. 8 zeigt ein Flussdiagramm eines weiteren Ausführungsbeispiels des erfindungsgemäßen Verfahrens zur Herstellung einer Verbundscheibe mit elektrischer Kontaktierung.

Im Unterschied zu Verbundscheiben mit einer Verbindung zwischen Sammelleiter 5 und Kontaktband 6 oder zwischen Sammelleiter 5 und Zuleitung 7 über eine Lotmasse oder einen elektrisch leitfähigen Klebstoff stehen die Kontaktbänder 6 in einer erfindungsgemäßen Verbundscheibe mit den Sammelleitern 5 in direktem Kontakt. An erfindungsgemäßen Testscheiben hat sich gezeigt, dass der Herstellungsprozess dadurch deutlich vereinfacht und beschleunigt werden kann. Dennoch wird eine dauerhaft stabile elektrische Verbindung zwischen Sammelleiter 5 und Kontaktband 6 bereitgestellt. Dieses Ergebnis war für den Fachmann unerwartet und überraschend.

### Bezugszeichenliste:

- (1): erste Scheibe
- (2): zweite Scheibe
- (3): elektrisch leitfähige Beschichtung
- (4): thermoplastische Zwischenschicht
- (5): Sammelleiter
- (6): Kontaktband
- (7): elektrische Zuleitung
- (8): Klebeband
- (9): Andruckelement
- (10): elektrisches Verbindungselement zwischen Kontaktband 6 und elektrischer Zuleitung 7

- (I): innenseitige Oberfläche der ersten Scheibe 1

- L_{S}: Länge eines Sammelleiters 5
- B_{S}: Breite eines Sammelleiters 5
- L_{K}: Länge eines Kontaktbandes 6
- B_{K}: Breite eines Kontaktbandes 6

- A-A': Schnittlinie

## Patentansprüche

1. Verbundscheibe mit elektrischer Kontaktierung, mindestens umfassend:
- eine erste Scheibe (1) und eine zweite Scheibe (2), die über eine thermoplastische Zwischenschicht (4) flächenmäßig miteinander verbunden sind,
- mindestens eine elektrisch leitfähige Beschichtung (3) mindestens auf der innenseitigen Oberfläche (I) der ersten Scheibe (1),
- mindestens einen Sammelleiter (5) auf einem Bereich der elektrisch leitfähigen Beschichtung (3) und
- mindestens ein elektrisch leitfähiges Kontaktband (6) auf mindestens einem Bereich des Sammelleiters (5),
wobei das Kontaktband (6) mit mindestens einer elektrischen Zuleitung (7) verbunden ist und zumindest ein Bereich des Kontaktbandes (6) mit dem Sammelleiter (5) in direktem Kontakt steht, wobei zwischen dem Sammelleiter (5) und dem Bereich des Kontaktbandes (6) keine mechanische Verbindung vorliegt, insbesondere keine Verbindung über eine Lotmasse oder einen Klebstoff, wobei
- das Kontaktband (6) vollflächig mit dem Sammelleiter (5) in direktem Kontakt steht, wobei eine Länge und eine Breite des Kontaktbands (6) höchstens einer Länge und einer Breite des Sammelleiters (5) entspricht, oder wobei
- das Kontaktband (6) eine größere Breite aufweist als der Sammelleiter (5) und dabei über zumindest eine Seitenkante des Sammelleiters (5) hinausragt und im Bereich des Sammelleiters (5) vollflächig mit dem Sammelleiter (5) in direktem Kontakt steht, wobei für den Fall, dass das Kontaktband (6) mit der elektrischen Zuleitung (7) über ein elektrisches Verbindungselement (10) verbunden ist, das Kontaktband und das elektrische Verbindungselement zweistückig ausgebildet sind.

2. Verbundscheibe nach Anspruch 1, wobei das Kontaktband (6) als Streifen einer elektrisch leitfähigen Folie ausgebildet ist und eine Dicke von 10 µm bis 500 µm, bevorzugt von 15 µm bis 200 µm aufweist und zumindest Kupfer, verzinntes Kupfer, Silber, Gold, Aluminium, Zink, Wolfram und/oder Zinn enthält.

3. Verbundscheibe nach einem der Ansprüche 1 bis 2, wobei das Kontaktband (6) eine Länge L_{K} von 10 mm bis 100 mm, bevorzugt von 20 mm bis 60 mm und eine Breite B_{K} von 2 mm bis 40 mm, bevorzugt von 5 mm bis 30 mm aufweist.

4. Verbundscheibe nach einem der Ansprüche 1 bis 2, wobei die Länge L_{K} des Kontaktbandes (6) von 80 % bis 120 %, bevorzugt von 90 % bis 110 % der Länge L_{S} des Sammelleiters (5) beträgt.

5. Verbundscheibe nach einem der Ansprüche 1 bis 4, wobei zwischen dem Kontaktband (6) und der zweiten Scheibe (2) ein Andruckelement (9) angeordnet ist, welches zumindest ein Polymer, ein Metall oder eine Legierung enthält und eine Dicke von größer oder gleich 200 µm aufweist.

6. Verbundscheibe nach einem der Ansprüche 1 bis 5, wobei der Sammelleiter (5) als gebrannte Siebdruckpaste ausgebildet ist, die Silberpartikel enthält, und eine Dicke von 5 µm bis 40 µm, bevorzugt von 8 µm bis 20 µm aufweist und bevorzugt eine Breite B_{S} von 2 mm bis 30 mm, besonders bevorzugt von 4 mm bis 20 mm aufweist.

7. Verbundscheibe nach einem der Ansprüche 1 bis 6, wobei die elektrische Zuleitung (7) als Folienleiter ausgebildet ist und bevorzugt mit dem Kontaktband (6) mittels einer Lotmasse oder eines elektrisch leitfähigen Klebers verbunden ist.

8. Verfahren zur Herstellung einer Verbundscheibe mit elektrischer Kontaktierung, mindestens umfassend:
(a) Aufbringen einer elektrisch leitfähigen Beschichtung (3) auf eine Oberfläche (I) einer ersten Scheibe (1),
(b) Aufbringen mindestens eines Sammelleiters (5) auf einem Bereich der elektrisch leitfähigen Beschichtung (3),
(c) Anordnen einer thermoplastischen Zwischenschicht (4) auf der Oberfläche (I) der ersten Scheibe (1) und Anordnen einer zweiten Scheibe (2) auf der thermoplastischen Zwischenschicht (4) und Anordnen mindestens eines mit einer elektrischen Zuleitung (7) verbundenen, elektrisch leitfähigen Kontaktbands (6), so dass zumindest ein Bereich des Kontaktbandes (6) mit dem Sammelleiter (5) in direktem Kontakt steht, wobei zwischen dem Sammelleiter (5) und dem Bereich des Kontaktbandes (6) keine mechanische Verbindung vorliegt, insbesondere keine Verbindung über eine Lotmasse oder einen Klebstoff und
(d) Verbinden der ersten Scheibe (1) und der zweiten Scheibe (2) über die thermoplastische Zwischenschicht (4), wobei
- das Kontaktband (6) vollflächig mit dem Sammelleiter (5) in direktem Kontakt steht, wobei eine Länge und eine Breite des Kontaktbands (6) höchstens einer Länge und einer Breite des Sammelleiters (5) entspricht, oder wobei
- das Kontaktband (6) eine größere Breite aufweist als der Sammelleiter (5) und dabei über zumindest eine Seitenkante des Sammelleiters (5) hinausragt und im Bereich des Sammelleiters (5) vollflächig mit dem Sammelleiter (5) in direktem Kontakt steht, wobei für den Fall, dass das Kontaktband (6) mit der elektrischen Zuleitung (7) über ein elektrisches Verbindungselement (10) verbunden ist, das Kontaktband und das elektrische Verbindungselement zweistückig ausgebildet sind.

9. Verfahren nach Anspruch 8, wobei in Verfahrensschritt (c) das Kontaktband (6) auf dem Sammelleiter (5) angeordnet wird und die thermoplastische Zwischenschicht (4) anschließend auf der Oberfläche (I) angeordnet wird.

10. Verfahren nach Anspruch 8, wobei in Verfahrensschritt (c) das Kontaktband (6) an der thermoplastischen Zwischenschicht (4) angebracht wird und die thermoplastische Zwischenschicht (4) mit dem Kontaktband (6) anschließend auf der Oberfläche (I) angeordnet wird.

11. Verwendung der Verbundscheibe nach einen der Ansprüche 1 bis 7 als beheizbare Scheibe, als Scheibe mit Antennenfunktion, als Scheibe mit schaltbaren oder regelbaren optischen Eigenschaften oder als Photovoltaik-Modul, insbesondere Dünnschicht-Photovoltaik-Modul.

## Claims

1. Composite pane with electrical contacting means, at least comprising:
- a first pane (1) and a second pane (2), which are bonded face-to-face to each other via a thermoplastic intermediate layer (4),
- at least one electrically conductive coating (3) at least on the interior-side surface (I) of the first pane (1),
- at least one busbar (5) on a region of the electrically conductive coating (3), and
- at least one electrically conductive contact strip (6) on at least one region of the busbar (5),
wherein the contact strip (6) is connected to at least one electrical feed line (7) and at least one region of the contact strip (6) is in direct contact with the busbar (5), wherein there is no mechanical connection, in particular no connection via a soldering compound or an adhesive, between the busbar (5) and the region of the contact strip (6),
- wherein the contact strip (6) is in direct full-surface contact with the busbar (5), wherein a length and a width of the contact strip (6) correspond at most to the length and width of the busbar (5), or wherein
- the contact strip (6) has a greater width than the busbar (5) and protrudes beyond at least one side edge of the busbar (5) and in the region of the busbar (5) is in direct full-surface contact with the busbar (5), wherein in case the contact strip (6) is connected to the electrical feed line (7) via an electrical connection element (10), the contact strip and the electrical connection element are implemented in two pieces.

2. Composite pane according to claim 1, wherein the contact strip (6) is implemented as a strip of an electrically conductive foil and has a thickness from 10 µm to 500 µm, preferably from 15 µm to 200 µm, and contains at least copper, tinned copper, silver, gold, aluminum, zinc, tungsten, and/or tin.

3. Composite pane according to one of claims 1 through 2, wherein the contact strip (6) has a length L_{K} from 10 mm to 100 mm, preferably from 20 mm to 60 mm, and a width B_{K} from 2 mm to 40 mm, preferably from 5 mm to 30 mm.

4. Composite pane according to one of claims 1 through 2, wherein the length L_{K} of the contact strip (6) is 80% to 120%, preferably from 90% to 110% of the length L_{S} of the busbar (5).

5. Composite pane according to one of claims 1 through 4, wherein, between the contact strip (6) and the second pane (2), a pressure element (9) is arranged, which contains at least one polymer, one metal, or one alloy, and has a thickness greater than or equal to 200 µm.

6. Composite pane according to one of claims 1 through 5, wherein the busbar (5) is implemented as a fired screen printing paste, which contains silver particles, and has a thickness from 5 µm to 40 µm, preferably from 8 µm to 20 µm, and preferably a width B_{S} from 2 mm to 30 mm, particularly preferably from 4 mm to 20 mm.

7. Composite pane according to one of claims 1 through 6, wherein the electrical feed line (7) is implemented as a foil conductor and is preferably connected to the contact strip (6) by a soldering compound or an electrically conductive adhesive.

8. Method for producing a composite pane with electrical contacting means, at least comprising:
(a) applying an electrically conductive coating (3) on one surface (I) of a first pane (1),
(b) applying at least one busbar (5) on a region of the electrically conductive coating (3),
(c) arranging a thermoplastic intermediate layer (4) on the surface (I) of the first pane (1) and arranging a second pane (2) on the thermoplastic intermediate layer (4) and arranging at least one electrically conductive contact strip (6) connected to an electrical feed line (7) such that at least one region of the contact strip (6) is in direct contact with the busbar (5), wherein there is no mechanical connection, in particular no connection via a soldering compound or an adhesive, between the busbar (5) and the region of the contact strip (6), and
(d) bonding of the first pane (1) and the second pane (2) via the thermoplastic intermediate layer (4), wherein
- the contact strip (6) is in direct full-surface contact with the busbar (5), wherein a length and a width of the contact strip (6) correspond at most to the length and width of the busbar (5), or wherein
- the contact strip (6) has a greater width than the busbar (5) and protrudes beyond at least one side edge of the busbar (5) and in the region of the busbar (5) is in direct full-surface contact with the busbar (5), wherein in case the contact strip (6) is connected to the electrical feed line (7) via an electrical connection element (10), the contact strip and the electrical connection element are implemented in two pieces.

9. Method according to claim 8, wherein in process step (c), the contact strip (6) is arranged on the busbar (5) and the thermoplastic intermediate layer (4) is then arranged on the surface (I).

10. Method according to claim 8, wherein in process step (c) the contact strip (6) is applied on the thermoplastic intermediate layer (4) and the thermoplastic intermediate layer (4) with the contact strip (6) is then arranged on the surface (I).

11. Use of the composite pane according to one of claims 1 through 7 as a heatable pane, as a pane with antenna function, as a pane with switchable or variable optical properties or as a photovoltaic module, in particular a thin-film photovoltaic module.

## Revendications

1. Vitre composite avec mise en contact électrique, comprenant au moins
- une première vitre (1) et une deuxième vitre (2), la première vitre (1) et la deuxième vitre (2) qui sont reliées l'une à l'autre sur toute leur surface au moyen d'une couche intermédiaire thermoplastique (4),
- au moins un revêtement électriquement conducteur (3) au moins sur la surface intérieure (I) de la première vitre (1),
- au moins un conducteur collectif (5) sur une zone du revêtement conducteur d'électricité (3) et
- au moins une bande de contact électriquement conductrice (6) sur au moins une zone du conducteur collectif (5),
où la bande de contact (6) est reliée à au moins une ligne d'alimentation électrique (7) et au moins une zone de la bande de contact (6) est en contact direct avec le conducteur collectif (5), où il n'y a pas de liaison mécanique entre le conducteur collectif (5) et la zone de la bande de contact (6), en particulier pas de liaison par une masse de soudure ou un adhésif, ou où
- la bande de contact (6) est en contact direct avec le conducteur collectif (5) sur toute sa surface, où une longueur et une largeur de la bande de contact (6) correspondant au maximum à une longueur et une largeur du conducteur collectif (5), ou
- la bande de contact (6) présente une largeur supérieure à celle du conducteur collectif (5) et dépasse par conséquent au moins un bord latéral du conducteur collectif (5) et est en contact direct avec le conducteur collectif (5) sur toute sa surface dans la zone du conducteur collectif (5), où, au cas où la bande de contact (6) est reliée à la ligne d'alimentation électrique (7) au moyen d'un élément de connexion électrique (10), la bande de contact et l'élément de connexion électrique sont conçus pour avoir deux niveaux.

2. Vitre composite selon la revendication 1, où la bande de contact (6) est formée comme une bande d'une feuille électriquement conductrice et a une épaisseur de 10 pm à 500 µm, de préférence de 15 µm à 200 µm, et contient au moins du cuivre, du cuivre étamé, de l'argent, de l'or, de l'aluminium, du zinc, du tungstène et/ou de l'étain.

3. Vitre composite selon l'une quelconque des revendications 1 à 2, où la bande de contact (6) a une longueur L_{K} de 10 mm à 100 mm, de préférence de 20 mm à 60 mm, et une largeur B_{K} de 2 mm à 40 mm, de préférence de 5 mm à 30 mm.

4. Vitre composite selon l'une des revendications 1 à 2, où la longueur L_{K} de la bande de contact (6) est de 80 % à 120 %, de préférence de 90 % à 110 % de la longueur L_{S} du conducteur collectif (5).

5. Vitre composite selon l'une quelconque des revendications 1 à 4, où un élément de pression (9) qui contient au moins un polymère, un métal ou un alliage et qui a une épaisseur supérieure ou égale à 200 µm, est disposé entre la bande de contact (6) et la deuxième vitre (2).

6. Vitre composite selon l'une quelconque des revendications 1 à 5, où le conducteur collectif (5) est conçu comme une pâte de sérigraphie cuite contenant des particules d'argent et ayant une épaisseur de 5 µm à 40 µm, de préférence de 20 µm à 20 µm et ayant de préférence une largeur B_{S} de 2 mm à 30 mm, de manière particulièrement préférée de 4 mm à 20 mm.

7. Vitre composite selon l'une des revendications 1 à 6, où le conducteur électrique (7) est conçu comme un conducteur en feuille et est de préférence relié à la bande de contact (6) au moyen d'une masse de soudure ou d'un adhésif électriquement conducteur.

8. Procédé de fabrication d'une vitre composite avec mise en contact électrique, comprenant au moins
(a) l'application d'un revêtement électriquement conducteur (3) sur une surface (I) d'une première vitre (1),
b) l'application d'au moins un conducteur collectif (5) sur une zone du revêtement électriquement conducteur (3),
c) la disposition d'une couche intermédiaire thermoplastique (4) sur la surface (I) de la première vitre (1) et la disposition d'une deuxième vitre (2) sur la couche intermédiaire thermoplastique (4) et la disposition d'au moins une bande de contact (6) électriquement conductrice reliée à un conducteur électrique (7), de manière à assurer qu'au moins une zone de la bande de contact (6) est en contact direct avec le conducteur collectif (5), où il n'y a pas de liaison mécanique entre le conducteur collectif (5) et la zone de la bande de contact (6), en particulier aucune liaison au moyen d'une masse de soudure ou d'un adhésif, et
(d) la connexion de la première vitre (1) et la deuxième vitre (2) par la couche intermédiaire thermoplastique
- la bande de contact (6) est en contact direct avec le conducteur collectif (5) sur toute sa surface, où une longueur et une largeur de la bande de contact (6) correspond au maximum à une longueur et une largeur du conducteur collectif (5), ou où
- la bande de contact (6) présente une largeur supérieure à celle du conducteur collectif (5) et dépasse par conséquent d'au moins un bord latéral du conducteur collectif (5) et est en contact direct avec le conducteur collectif (5) sur toute sa surface dans la zone du conducteur collectif (5), où, au cas où la bande de contact (6) est reliée à la ligne d'alimentation électrique (7) au moyen d'un élément de connexion électrique (10), la bande de contact et l'élément de connexion électrique sont conçus pour avoir deux niveaux.

9. Procédé selon la revendication 8, où, à l'étape de procédé (c), la bande de contact (6) est disposée sur le collectif (5) et la couche intermédiaire thermoplastique (4) est ensuite disposée sur la surface (I).

10. Procédé selon la revendication 8, où, à l'étape de procédé (c), la bande de contact (6) est fixée sur la couche intermédiaire thermoplastique (4) et la couche intermédiaire thermoplastique (4) est ensuite disposée sur la surface (I)avec la bande de contact (6).

11. Utilisation de la vitre feuilletée selon l'une des revendications 1 à 7 comme vitre chauffante, comme vitre avec fonction d'antenne, comme vitre avec des propriétés optiques commutables ou réglables ou comme module photovoltaïque, en particulier comme module photovoltaïque à couche mince.
